# EUROPÄISCHE PATENTSCHRIFT

(11) **EP 0 490 460 B1**
(45) Veröffentlichungstag und Bekanntmachung des Hinweises auf die Patenterteilung: **05.01.1994**
(21) Anmeldenummer: 91250303.4
(22) Anmeldetag: 06.11.1991
(51) Int. Cl.: F16K 11/065, F16K 27/04

(54) **Wegeventil in Modulbauweise**
Modular directional valve
Distributeur modulaire

(30) Priorität: 07.12.1990 DE 4039564
(43) Veröffentlichungstag der Anmeldung: 17.06.1992
(73) Patentinhaber: MANNESMANN Aktiengesellschaft, 40027 Düsseldorf (DE)
(72) Erfinder: Meyer, Ernst-August, W-3015 Wennigsen 5 (DE); Dannenberg, Werner, W-3005 Hemmingen (DE); Thomas, Johannes, W-3003 Ronnenberg 2 (DE); Krafft, Achim, W-3000 Hannover 91 (DE); Schmitz, Manfred, W-3008 Garbsen 4 (DE)
(74) Vertreter: Presting, Hans-Joachim, Dipl.-Ing.

(56) Entgegenhaltungen:
- EP-A- 0 108 951
- EP-A- 0 121 849
- EP-A- 0 198 234
- GB-A- 2 095 795

## Beschreibung

Die Erfindung betrifft ein Wegeventil gemäß Oberbegriff des Patentanspruches 1.

Ein Wegeventil der gattungsgemäßen Art ist aus der EP-A-0 093 359 bekannt. Dabei besteht das Wegeventil aus einem Ventilkörper, in dem ein Betätigungsglied verschiebbar angeordnet und entsprechend über ein Paar sich gegenüber liegenden Steuergehäusen in Verschieberichtung betätigbar ist. Der Ventilkörper besteht dabei aus einem behälterförmigen und mit einem ebenen Deckel verschließbaren Grundkörper, der an der dem Deckel gegenüberliegenden Seite mit ISO-Gasanschlußöffnungen versehen ist. Die Steuergehäuse liegen dabei jedoch außerhalb des behälterförmigen Ventilkörpers. Dies führt nachteiligerweise dazu, daß die Steuergehäuse separat anmontiert und dabei auch entsprechend abgedichtet werden müssen. Das Betätigungsglied ist hierbei als längsbeweglicher Steuerschieber ausgebildet, der innerhalb des Gehäuses in einer mehrteiligen Schieberbuchse geführt ist. Diese Mehrteiligkeit im Bereich des das Betätigungsglied führenden Ventilkörpers erhöht zudem den Montageaufwand. Ein weiteres Wegeventil ist aus der EP-A-0 134 185 bekannt. Hierbei besteht das Wegeventil aus einem Ventilkörpergehäuse, in weichem eine Mehrzahl von parallel in lateraler Richtung beabstandeten Ventilkammern angeordnet sind. Die Ventilkammern werden dabei aus aneinander fügbaren Segmenten gebildet, die jeweils mit einer Öffnung versehen sind, die auf einer gemeinsamen die Bewegungsachse des darin geführten beweglichen Ventilgliedes bildenden Achse fluchten. In axialer Richtung nach außen weisend liegt ein Paar von Steuergehäusen sich gegenüber. Das Ventilglied wird hierbei über die Steuergehäuse in axialer Richtung durch Verschiebung in gewünschte Stellungen betätigt.

Das Ventilglied selbst besteht aus einem rotationssymmetrischen Stab, der mit abschnittsweise angeordneten Verjüngungen versehen ist, über die je nach Stellung des Ventilgliedes entweder Gasdurchgang oder Gassperrung zwischen den Ventilkammern bewirkt wird. Die gesamte Anordnung besteht aus Ventilkammern mit Ventilglied, Ventilkörpergehäuse und Steuergehäusen und ist im montierten Zustand an eine Ventilgrundplatte angeschraubt. Die wesentlichen Dichtflächen, d.h. die Abdichtung des Ventilgliedes zwischen den Kammern und die Abdichtung des gesamten Ventilkammersystems werden über einzelne Dichtungselemente bzw. Dichtungsringe bewerkstelligt.

Nachteilig ist hierbei, daß das Ventil aus einer Vielzahl von Einzelelementen besteht, die sowohl die Montage als auch die Wartung erheblich erschweren.

Ein weiteres Ventil ist aus der DE-A-1 915 966 bekannt. Hierbei besteht das Ventil aus einem Ventilkammern aufweisenden zusammenhängenden Ventilkörper, in dem eine sich in axialer Richtung durch alle Ventilkammern hindurch erstreckende Öffnung angeordnet ist, durch die ein ebenfalls rotationssymmetrisches Ventilglied verschiebbar geführt ist. Das Problem ist auch hierbei eine entsprechend saubere Abdichtung zwischen den einzelnen Bereichen des Ventilgliedes und den Ventilkammern zu erreichen. Der Ventilkörper wird hierbei auf einem entsprechende Gasanschlüsse aufweisenden Grundkörper befestigt. Über diese bis hierher beschriebene Anordnung ist eine teilweise umfassende Schutzhaube mit dem Ventilkörper und dem Grundkörper verbunden.

Nachteilig ist hierbei, daß die das Ventilglied betätigenden Steuergehäuse außerhalb der Schutzhaube angeordnet sind, wodurch das gesamte Ventil im Montagebetrieb schwerer zu handhaben ist.

Ausgehend von diesem Stand der Technik stellt sich die Erfindung die Aufgabe, ein Wegeventil der gattungsgemäßen Art zu schaffen, das einfach und schnell montierbar ist und daß im Bereich des Betätigungsgliedes und der zu schaltenden Druckmittelwege auf Dichtungselemente verzichtet werden kann.

Die gestellte Aufgabe wird bei einem Wegeventil der gattungsgemäßen Art durch die kennzeichnenden Merkmale des Patentanspruches 1 gelöst. Weitere vorteilhafte Ausgestaltungen der Erfindung sind in den Unteransprüchen dargestellt.

Der erfindungsgemäße Vorschlag, daß die Steuergehäuse mit dem Deckel lösbar verbunden und gemeinsam mit dem Betätigungsglied an der den Gasanschlüssen gegenüberliegenden Seite in den Ventilkörper dicht- und formschlüssig einschieb- und fixierbar sind, führt zu einer Reihe von Vorteilen. Ein erster Vorteil besteht darin, daß alle wesentlichen Elemente des Ventils in einem geschlossenen zusammenhängenden Körper untergebracht sind. Bei der vorliegenden Erfindung kann dies in vorteilhafter Weise durch die behälterförmige Ausbildung des Ventilkörpers geschehen, so daß auf ein zusätzliches Gehäuse verzichtet werden kann. Die üblicherweise extern an den Ventilkörper anzuschließenden Steuergehäuse sind bei der vorliegenden Erfindung im Ventilkörper integriert. Die Tatsache, daß bei der vorliegenden Erfindung die Anzahl der zu montierenden Elemente extrem klein gehalten ist, ergibt dann den Vorteil, daß die vorhandenen Ventilelemente sehr schnell und zudem auch noch paßgenau eingefügt werden können.

Die in vorteilhafter Ausgestaltung der Erfindung vorgeschlagene Anordnung der Ventilkammern innerhalb des Betätigungsgliedes führt zu dem Vorteil, daß gegenüber dem Stand der Technik hierbei auf eine mit einer Vielzahl von Dichtungen versehenes Kammersystem innerhalb des Ventilkörpers verzichtet werden kann. Um den Dichtschluß zwischen Betätigungsglied und Ventilkörper in möglichst einfacher und damit montagefreundlicherer Weise zu erreichen, sind in weiterer vorteilhafter Ausgestaltung der Erfindung die aneinanderliegenden Oberflächen aus polierter Keramik. Zur zusätzlichen dauerhaften Erreichung des Dichtschlusses nach Montage des Ventils ist in vorteilhafter Ausgestaltung der Erfindung das Ventil mit sich durch Deckel und Ventilkörper hindurch erstreckenden Bohrungen versehen, wodurch zum einen das Ventil mit einer Iso-Grundplatte verbindbar ist und zum anderen auch die Wirkung des Anpressens des Deckels in Richtung des Betätigungsgliedes bzw. der zu dichtenden Flächen auf vorteilhaft einfache Weise bewerkstelligt werden kann. Die erfindungsgemäße Anordnung eines Druckmittelkanals innerhalb des Deckels, der sich in axialer Richtung erstreckt und an den axial heraustretenden Stellen mit Anschlußstutzen versehen ist, hat den Vorteil, die Steuergehäuse über eine solche integrierte Druckmittelleitung zum einen zu versorgen und zum anderen durch die Ausbildung von Anschlußstutzen gleichzeitig mit dem Deckel lösbar zu verbinden. Dies führt zu einer einfach handhabbaren Montage. Die innerhalb der Steuergehäuse angeordneten Zylinderräume können außerdem somit auf einfache Weise mit Druckmitteln versorgt werden. Zur Bewerkstelligung einer guten Verbindung zwischen Steuergehäusen und Deckel sind in weiterer vorteilhafter Ausgestaltung der Erfindung die Verbindungsstellen entsprechend angeformt. Hierdurch ergibt sich im montierten Zustand des Ventils auch im Deckelbereich eine ebene Fläche ohne Kanten und Versetzungen.

Zur Erleichterung der Montage und zwecks paßgenauer Platzierung der einzelnen Ventilelemente während der Montage, sind in vorteilhafter Ausgestaltung der Erfindung die Steuergehäuse an den in axialer Richtung nach außen weisenden Seiten mit jeweils einem sich in Einschieberichtung erstreckenden Führungssteg versehen. Entsprechend diesen Führungsstegen weist der Ventilkörper die jeweiligen Führungsstege aufnehmenden Ausnehmungen auf, wodurch in besonders einfacher und vorteilhafter Weise die o.g. paßgenaue Positionierung der einzelnen Ventilelemente erreicht wird. Diese paßgenaue Positionierung ist bei der vorliegenden Erfindung deshalb so besonders wichtig, weil im Bereich des Betätigungsgliedes und des Ventilkörpers allein durch keramische Dichtflächen eine genügend große Dichtigkeit erreicht werden muß. Die Anordnung der Führungsstege und der Ausnehmungen erlauben außerdem einen schnellen und sicheren Zusammenbau. Die in weiterer vorteilhafter Ausgestaltung der Erfindung vorgeschlagene Anordnung eines ebenen Rollagers an der Innenfläche des Deckels, welches am Betätigungsglied beweglich anliegt, erzielt eine leichtgängige und sichere Beweglichkeit des Betätigungsgliedes und reduziert somit auch die Ansprechzeiten des Ventiles.

Insgesamt ergibt sich bei dem erfindungsgemäß vorgeschlagenen Wegeventil eine einfache Handhabung während der Montage und gewährleistet durch seine einfache und verschleißreduzierte Ausgestaltung einen zuverlässigen Betrieb und hohe Standzeiten.

Ein Ausgestaltungsbeispiel der Erfindung ist in der Zeichnung dargestellt und im folgenden näher erläutert.

Es zeigen:
- Fig. 1: Wegeventil in Explosionsdarstellung,
- Fig. 2: Wegeventil im Längsschnitt (Seitenansicht),
- Fig. 3: Draufsicht in geöffneten Ventilkörper,
- Fig. 4: Ventil im montierten Zustand.

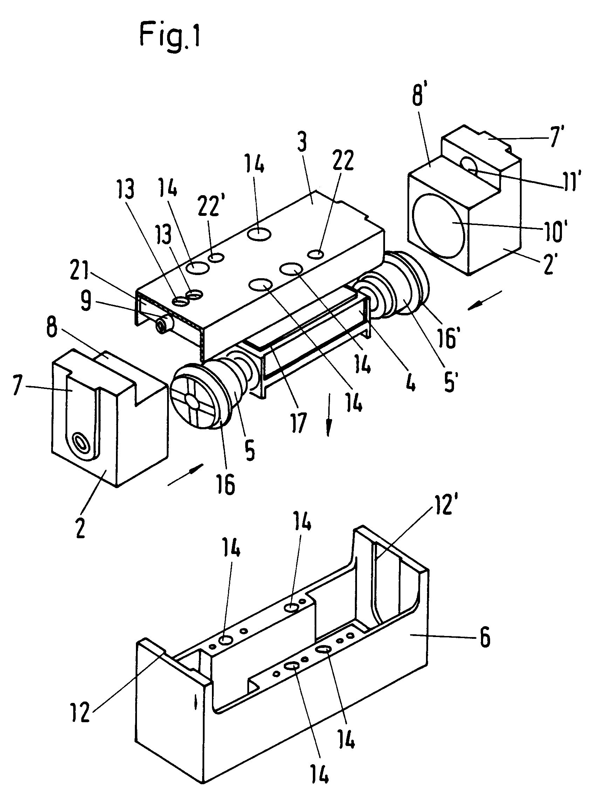

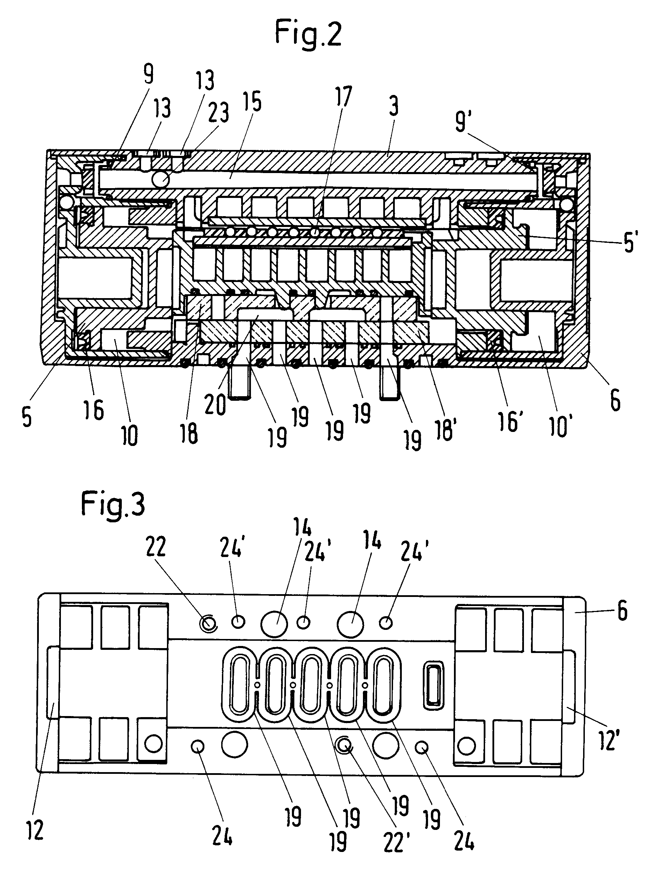

Figur 1 stellt die Zuordnung der einzelnen Ventilelemente mit Hinweis auf die vorgegebene Richtung der Zusammenführung der einzelnen Teile dar. Der erste Montageschritt ist, daß im Ventilkörper das gesamte Ventilpaket bestehend aus keramischen Platten 18,18' (Fig. 2) mit den entsprechenden dichtenden Flächen, Betätigungsglied 4 und Rollenlager 17 lose aufgeschichtet wird. Der nächste Montageschritt besteht darin, daß die beiden Kolben 5 und 5' mit Dichtungen 16 und 16' versehen in die Steuergehäuse 2 und 2' eingeführt werden. An den Schmalseiten des Deckels 3 sind die Anschlußstutzen 9 und 9' angeordnet, von denen in dieser Darstellung nur der Anschlußstutzen 9 sichtbar ist. An diesen Enden bzw. Schmalseiten des Deckels 3 werden in dem nachfolgenden Montageschritt die Steuergehäuse 2 und 2' herangeführt, bis die Anformungen 21 und 21' des Deckels 3 komplementär ausfüllend an den Anformungen 8 und 8' der Steuergehäuse 2 und 2' anliegen. Sobald die Anformungen entsprechend anliegen, ragen die Anschlußstutzen 9 und 9' dichtschlüssig in die Bohrungen 11 und 11' der Steuergehäuse 2 und 2' hinein und halten in diesem Montagestadium auch die Steuergehäuse am Ventildeckel 3. Im letzten Montageschritt werden dann die Steuergehäuse 2 und 2' gemeinsam mit dem verbundenen Ventildeckel 3 in den Ventilkörper 6 eingeführt. Dieser Montageschritt wird dadurch erleichtert, daß die Steuergehäuse 2 und 2' an den entsprechend nach außen weisenden Flächen mit Führungsstegen 7 und 7' versehen sind. Der Ventilkörper 6 ist an den entsprechenden Stirnseiten mit Ausnehmungen 12 und 12' versehen, die die Führungsstege 7 und 7' bündig aufnehmen. Das Einschieben der vormontierten Elemente erfolgt bis auf das aufgeschichtete Ventilpaket, so daß das Betätigungsglied 4 mitsamt der keramischen Platten 18,18' und den dichtenden Flächen an den Gasanschlußöffnungen 19 dichtend anliegen. Die Seitenwände des Ventilkörpers 6 sind dabei im Bereich des Betätigungsgliedes 4 verdickt, so daß dort die mit dem Deckel 3 fluchtenden Bohrungen 14 und 22, 22' und 24 und 24' untergebracht werden können. Über die Öffnungen 14 ist das gesamte Ventil an eine Iso-Platte anschließbar, und durch die Öffnungen 24 und 24' wird der Kanal 15 mit Druckluft versorgt. Die Tatsache, daß die Kolben 5 und 5' keine feste oder arretierende Verbindung mit dem Betätigungsglied 4 haben, erleichtert zusätzlich noch die Montage, indem die Kolben unabhängig von dem hierüber angelenkten Betätigungsglied 4 eingebaut werden können.

Figur 2 zeigt das montierte Ventil im Längsschnitt in Seitenansicht. Hier ist nun die Anordnung des im Deckel angeordneten Kanals 15 zu erkennen, der einerseits in die Öffnungen 13 mündet und andererseits in die Anschlußstutzen 9 und 9'. Zwischen den Öffnungen 13 ist ein Dichtelement 23 angeordnet, welches den Kanal 15 in zwei Abschnitte teilt. Das Betätigungsglied 4 ist mit einer keramischen Platte 18 versehen, in denen Ventilkammern 20 integriert sind. Die keramische Platte 18 ist mit dem Betätigungsglied 4 gekoppelt und wird so auch bewegt. Die Platte 18' steht fest, d. h. sie bewegt sich nicht mit.

Die Stellung des Betätigungsgliedes 4 bzw. der keramischen Platte 18 und damit der Ventilkammer 20 der Iso-Gasanschlüsse 19 ergibt die Schaltstellung des Ventiles. Das Rollager 17, welches bündig zwischen Deckel 3 und Betätigungslied 4 angeordnet ist, gewährleistet eine verschleißarme Verschiebbarkeit des gesamten Betätigungsgliedes. Die beidseitig angeordneten Kolben 5 und 5' lenken das Ventilglied 4 an. Die Dichtelemente 16 und 16' umfassen die Kolben 5 bzw. 5' und dichten sie innerhalb der Zylinderräume 10 und 10' sauber ab.

Figur 3 zeigt den Ventilkörper 6 in Draufsicht. Am Boden des behälterförmigen Ventilkörpers 6 sind die Iso-Gasanschlußöffnungen 19 angeordnet. Die Bohrungen 14 sind im verdickten Wandbereich des Ventilkörpers angebracht, um dort den nötigen Halt zu erzielen. Die Ausnehmungen 12 und 12' sind mittig, d.h. auf eine Achse fluchtend angeordnet, so daß die dort einzuschiebenden Steuergehäuse 2 und 2' gleichgeformt sind. Dies hat den Vorteil, daß beide Steuergehäuse aus einer einzigen Druckgußform hergestellt werden können.

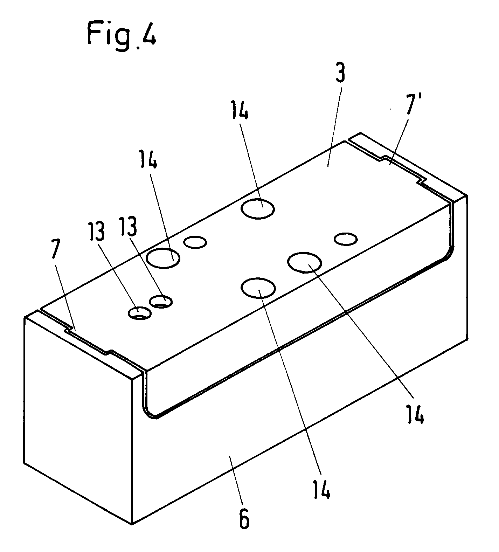

Figur 4 zeigt nun das fertig montierte Ventil, woran deutlich wird, daß alle Einzelelemente des Ventils im behälterförmigen Ventilkörper 6 integriert sind und eine geschlossene kubische Außenkontur bilden, bei denen sogar der Deckel 3 und die Stege 7 bzw. 7' bündig und eben anliegen. Die Bohrungen 14 fluchten nun durch den Deckel 3 hindurch und treten an der Unterseite des Ventilkörpers 6 aus und ermöglichen somit die Befestigung des Ventiles auf der Iso-Grundplatte.

Dadurch ist außerdem der nötige Dichtschluß an den entsprechenden Flächen gegeben.

Lediglich zwei zusätzliche Schrauben durch den Deckel des Ventils hindurch sorgen für die Fixierung aller Einzelelemente des Ventils.

## Patentansprüche

1. Wegeventil in Modulbauweise bestehend aus einem Ventilkörper (6), in dem ein Betätigungsglied (4) entlang einer räumlich festen Achse verschiebbar angeordnet ist, und einem Paar auf der Achse sich gegenüberliegenden Steuergehäusen (2,2'), über die das Betätigungsglied (4) betätigbar ist, wobei der Ventilkörper (6) aus einem behälterförmigen, mit einem ebenen Deckel (3) verschließbaren Grundkörper besteht, der an der dem Deckel (3) gegenüberliegenden Seite mit Iso-Gasanschlußöffnungen (19) versehen ist,
**dadurch gekennzeichnet,**
daß die Steuergehäuse (2, 2') mit dem Deckel (3) lösbar verbunden und gemeinsam mit dem Betätigungsglied (4) an der den Gasanschlüssen (19) gegenüberliegenden Seite in den Ventilkörper (6) dicht- und formschlüssig einschieb- und fixierbar sind.

2. Wegeventil in Modulbauweise nach Anspruch 1,
**dadurch gekennzeichnet,**
daß das Betätigungsglied (4) mit einer keramischen Platte (18) verbindbar ist, die Ventilkammern (20) aufweist, die an der den Gasanschlußöffnungen (19) zugewandten Seite offen sind.

3. Wegeventil in Modulbauweise nach den Ansprüchen 1 und 2,
**dadurch gekennzeichnet,**
daß der Dichtschluß zwischen Betätigungsglied (4) und Ventilkörper (6) durch polierte keramische Oberflächen bewerkstelligt ist.

4. Wegeventil in Modulbauweise nach den Ansprüchen 1 bis 3,
**dadurch gekennzeichnet**,
daß das Ventil (1) mit sich durch Deckel (3) und Ventilkörper (6) hindurch erstreckenden Bohrungen (14) versehen ist, über die das Ventil durch entsprechende Befestigungsmittel mit einer Iso-Grundplatte verbindbar ist.

5. Wegeventil in Modulbauweise nach den Ansprüchen 1 bis 4,
**dadurch gekennzeichnet,**
daß der Deckel (3) mit einem in axialer Richtung verlaufenden Druckmittelkanal (15) versehen ist, der an den aus dem Deckel (3) axial heraustretenden Stellen mit Anschlußstutzen (9, 9') versehen ist, über die die Steuergehäuse (2, 2') mit dem Deckel (3) lösbar verbindbar sind.

6. Wegeventil in Modulbauweise nach Anspruch 5,
**dadurch gekennzeichnet,**
daß die Zylinderräume (10, 10') der Steuergehäuse (2,2') über die Anschlußstutzen (9, 9') des Deckels (3) mit dem Kanal (15) verbindbar sind.

7. Wegeventil in Modulbauweise nach Anspruch 6,
**dadurch gekennzeichnet,**
daß die Steuergehäuse (2, 2') und der Deckel (3) an den miteinander verbindbaren Seiten sich komplementär ausfüllend, derart angeformt sind, daß sich im montierten Zustand des Ventils eine ebene Deckelfläche ergibt.

8. Wegeventil in Modulbauweise nach einem oder mehreren der vorhergehenden Ansprüche,
**dadurch gekennzeichnet**,
daß die Steuergehäuse (2, 2') an den in axialer Richtung nach außen weisenden Seiten mit jeweils einem sich in Einschiebrichtung erstreckenden Führungssteg (7) bzw. (7') versehen sind, und daß der Ventilkörper (6) an den entsprechenden Seiten jeweils eine den jeweiligen Führungssteg (7) bzw. (7') bündig aufnehmende Ausnehmung (12) bzw. (12') aufweist.

9. Wegeventil in Modulbauweise nach einem oder mehreren der vorhergehenden Ansprüche,
**dadurch gekennzeichnet,**
daß das Betätigungsglied (4) über ein ebenes Rollager (17) an der Innenfläche des Deckels (3) beweglich anliegt.

## Claims

1. A distributing valve of modular construction, consisting of a valve body (6) in which an actuating member (4) is arranged to be displaceable along a spatially fixed axis, and a pair of control housings (2, 2') which lie opposite one another on the axis, by means of which housings the actuating member (4) can be actuated, the valve body (6) consisting of a container-shaped basic body which can be closed with a flat cover (3), which body is provided on the side opposite the cover (3) with ISO-gas connection openings (19), characterised in that the control housings (2, 2') are detachably connected to the cover (3) and jointly with the actuating member (4) can be inserted and fixed into the valve body (6) in sealing and positive manner on the side opposite the gas connections (19).

2. A distributing valve of modular construction according to Claim 1, characterised in that the actuating member (4) can be connected to a ceramic plate (18) which bears valve chambers (20) which are open on the side facing the gas connection openings (19).

3. A distributing valve of modular construction according to Claims 1 and 2, characterised in that the sealing connection between the actuating member (4) and valve body (6) is brought about by polished ceramic surfaces.

4. A distributing valve of modular construction according to Claims 1 to 3, characterised in that the valve (1) is provided with bores (14) extending through the cover (3) and valve body (6), via which bores the valve can be connected to an ISO base plate by means of corresponding attachment means.

5. A distributing valve of modular construction according to Claims 1 to 4, characterised in that the cover (3) is provided with a pressure medium duct (15) extending in the axial direction, which duct is provided at the points emerging axially from the cover (3) with connecting pieces (9, 9') by means of which the control housings (2, 2') can be detachably connected to the cover (3).

6. A distributing valve of modular construction according to Claim 5, characterised in that the cylindrical spaces (10, 10') of the control housings (2, 2') can be connected to the duct (15) by means of the connecting pieces (9, 9') of the cover (3).

7. A distributing valve of modular construction according to Claim 6, characterised in that the control housings (2, 2') and the cover (3), complementarily filling each other on the sides which can be connected together, are formed such that in the assembled state of the valve a flat cover surface is produced.

8. A distributing valve of modular construction according to one or more of the preceding Claims, characterised in that the control housings (2, 2') on the sides which face outwards in the axial direction are each provided with a guide bar (7) or (7') respectively which extends in the direction of insertion, and that the valve body (6) has a recess (12) or (12') respectively which receives the respective guide bar (7) or (7') in flush manner on each of the corresponding sides.

9. A distributing valve of modular construction according to one or more of the preceding Claims, characterised in that the actuating member (4) lies against the inner surface of the cover (3) in movable manner via a flat roller bearing (17).

## Revendications

1. Distributeur de construction modulaire, constitué d'un corps de distributeur (6), dans lequel un organe d'actionnement (4) est agencé de façon mobile le long d'un axe spatialement fixe, et d'une paire de boîtiers de commande (2,2') opposés sur l'axe, par l'intermédiaire desquels l'organe d'actionnement (4) peut être actionné, le corps de distributeur (6) étant constitué d'un corps de base en forme de récipient, pouvant être fermé par un couvercle plan (3), corps de base qui est muni, du côté opposé au couvercle (3), d'ouvertures (19) de raccords de gaz,
caractérisé en ce que les boîtiers de commande (2,2') sont reliés de façon amovible au couvercle (3) et, en même temps que l'organe d'actionnement (4), peuvent être insérés et fixés, de façon mécanique et étanche, dans le corps de distributeur (6) du côté opposé aux raccords de gaz (19).

2. Distributeur de construction modulaire selon la revendication 1,
caractérisé en ce que l'organe d'actionnement (4) peut être relié à une plaque en céramique (18) qui présente des chambres de distributeur (20) qui sont ouvertes du côté en regard des ouvertures des raccords de gaz (19).

3. Distributeur de construction modulaire selon les revendications 1 et 2,
caractérisé en ce que l'étanchéification entre l'organe d'actionnement (4) et le corps de distributeur (6) est obtenue par des surfaces en céramique polies.

4. Distributeur de construction modulaire selon les revendications 1 à 3,
caractérisé en ce que le distributeur (1) est muni de perçages (14) s'étendant à travers le couvercle (3) et le corps de distributeur (6), par l'intermédiaire desquels le distributeur peut être relié à une plaque de base isolante par des moyens de fixation correspondants.

5. Distributeur de construction modulaire selon les revendications 1 à 4,
caractérisé en ce que le couvercle (3) est muni d'un canal (15) de fluide sous pression s'étendant en direction axiale, qui est muni de manchons de raccordement (9,9') aux endroits sortant axialement du couvercle (3), par l'intermédiaire desquels les boîtiers de commande (2,2') peuvent être reliés de façon amovible au couvercle (3).

6. Distributeur de construction modulaire selon la revendication 5,
caractérisé en ce que les espaces cylindriques (10,10') des boîtiers de commande (2,2') peuvent être reliés au canal (15) par l'intermédiaire des manchons de raccordement (9,9') du couvercle (3).

7. Distributeur de construction modulaire selon la revendication 6,
caractérisé en ce que les boîtiers de commande (2,2') et le couvercle (3) sont formés sur les côtés qui peuvent être reliés l'un à l'autre, en se jointoyant de façon complémentaire, de sorte, dans l'état monté du distributeur, une surface plane du couvercle est obtenue.

8. Distributeur de construction modulaire selon une ou plusieurs des revendications précédentes,
caractérisé en ce que les boîtiers de commande (2,2') sont munis, sur les côtés orientés vers l'extérieur en direction axiale, à chaque fois, d'une nervure de guidage (7,7') s'étendant dans la direction d'insertion, et en ce que le corps de distributeur (6) présente, sur les côtés correspondants, à chaque fois, un évidement (12,12') recevant, à fleur, la nervure de guidage respective (7,7').

9. Distributeur de construction modulaire selon une ou plusieurs des revendications précédentes,
caractérisé en ce que l'organe d'actionnement (4) repose, de façon mobile, sur la surface interne du couvercle (3) par l'intermédiaire d'un palier à rouleaux plan (17).
